# EUROPEAN PATENT APPLICATION

(11) **EP 4 513 947 A1**
(43) Date of publication of application: **26.02.2025**
(21) Application number: 23834588.8
(22) Date of filing: 08.06.2023
(51) Int. Cl.: H04W 24/02

(54) **DATA TRANSMISSION METHOD AND APPARATUS**

(30) Priority: 05.07.2022 CN 202210782736
(71) Applicant: Huawei Technologies Co., Ltd., Shenzhen, Guangdong 518129 (CN)
(72) Inventor: CHEN, Erkai, Shenzhen, Guangdong 518129 (CN); XU, Rui, Shenzhen, Guangdong 518129 (CN); QIN, Yi, Shenzhen, Guangdong 518129 (CN); CAO, Youlong, Shenzhen, Guangdong 518129 (CN)
(74) Representative: Goddar, Heinz J.
(86) International application number: PCT/CN2023/099165
(87) International publication number: WO 2024/007814

(57) **Abstract**

A data transmission method and an apparatus are provided. The method includes: receiving first configuration information; sending, based on the first configuration information, time information corresponding to data, where the time information is generated based on an obtaining moment of the data or a remaining delay budget of the data. According to the solutions provided in this application, a party that schedules the data can determine the remaining delay budget of the data, to complete data transmission within a delay budget of the data. Therefore, communication performance is improved.

## Description

This application claims priority to Chinese Patent Application No. 202210782736.3, filed with the China National Intellectual Property Administration on July 5, 2022 and entitled "DATA TRANSMISSION METHOD AND APPARATUS", which is incorporated herein by reference in its entirety.

### TECHNICAL FIELD

Embodiments of this application relate to the communication field, and more specifically, to a data transmission method and an apparatus.

### BACKGROUND

With development of communication, a 5th generation (5th generation, 5G) communication system gradually penetrates into some multimedia services that have high real-time performance and a large data capacity requirement, such as video transmission, cloud gaming (cloud gaming, CG), and extended reality (extended reality, XR). The multimedia service has a strict requirement on a data transmission delay. Therefore, how to meet a data transmission delay requirement in a communication process is a problem that needs to be considered.

### SUMMARY

Embodiments of this application provide a communication method and a communication apparatus, to complete data transmission within a delay budget of data. Therefore, communication performance is improved.

According to a first aspect, a communication method is provided. The method may be performed by a first apparatus. The first apparatus may be a network device or a terminal device, may be a chip or a circuit in the terminal device, may be a chip or a circuit in the network device, may be a logical module or software that can implement all or some functions of the network device, or may be a logical module or software that can implement all or some functions of the terminal device. This is not limited in this application. The method includes: receiving first configuration information; sending, based on the first configuration information, time information corresponding to data, where the time information is generated based on an obtaining moment of the data or a remaining delay budget of the data.

In a possible implementation, the time information is used for scheduling and transmission of the data, and the scheduling and transmission of the data may be understood as: configuring a resource for the data, so that transmission of the data is performed on the configured resource.

For example, the time information directly/indirectly indicates the obtaining moment of the data, or directly/indirectly indicates the remaining delay budget of the data.

According to the foregoing solution, when it is configured that the first apparatus sends the time information corresponding to the data, the first apparatus sends the time information corresponding to the data, so that a party that schedules the data can determine the remaining delay budget of the data. For example, the time information is related to the obtaining moment of the data. In this case, after receiving the time information, the party that schedules the data may determine the remaining delay budget of the data based on a delay budget of the data and the time information. Alternatively, the time information is related to the remaining delay budget of the data. In this case, after receiving the time information, the party that schedules the data may determine the remaining delay budget of the data based on the time information. In this way, data transmission is completed within the delay budget of the data. Therefore, communication performance is improved.

With reference to the first aspect, in some implementations of the first aspect, when a media access control entity or a packet data convergence protocol entity obtains the data, the time information corresponding to the data is sent based on the first configuration information.

According to the foregoing solution, when it is configured that first apparatus sends the time information corresponding to the data, and the media access control entity or the packet data convergence protocol entity obtains the data, the first apparatus sends the time information corresponding to the data, so that accuracy of determining the remaining delay budget of the data by the party that schedules the data can be increased.

With reference to the first aspect, in some implementations of the first aspect, the time information is generated based on any one of the following: a time interval between the obtaining moment of the data and a sending moment of the time information; a time interval between the obtaining moment of the data and a sending moment of a scheduling request, where the scheduling request is used to request a scheduling resource of the data; or a difference between the delay budget of the data and the remaining delay budget of the data.

For example, the time information indicates the time interval between the obtaining moment of the data and the sending moment of the time information, indicates the time interval between the obtaining moment of the data and the sending moment of the scheduling request, indicates the remaining delay budget of the data, or indicates the difference between the delay budget of the data and the remaining delay budget of the data. The time interval may be a quantity of time elements, or may be a quantity of time units.

According to the foregoing solution, in comparison with a solution of sending the obtaining moment of the data, signaling overheads of sending the time information can be reduced.

With reference to the first aspect, in some implementations of the first aspect, the time information is carried in a physical uplink control channel format 0, and a value of a sequence cyclic shift of the physical uplink control channel format 0 corresponding to the time information is any one of 2, 5, 8, and 11.

According to the foregoing solution, different time information may be indicated by different values of the sequence cyclic shift, so that processing complexity of the first apparatus can be reduced.

With reference to the first aspect, in some implementations of the first aspect, the time information is carried in a physical uplink control channel format 1, the time information includes two bits, and a modulation scheme corresponding to the time information is quadrature phase shift keying.

According to the foregoing solution, the time information can be accurately indicated, and signaling overheads are low.

With reference to the first aspect, in some implementations of the first aspect, the time information is carried in a media access control control element MAC CE, where the MAC CE includes logical channel identification information or logical channel group identification information.

According to the foregoing solution, the party that schedules the data may determine an association relationship between the time information and a logical channel or a logical channel group, so that a corresponding resource can be more accurately configured for the data transmission.

With reference to the first aspect, in some implementations of the first aspect, the MAC CE further includes buffer size information.

According to the foregoing solution, the party that schedules the data may determine a size of the data, so that an appropriate resource may be configured for the data transmission.

With reference to the first aspect, in some implementations of the first aspect, second configuration information is received, where the second configuration information is used to configure at least two values, and the time information indicates one of the at least two values.

According to the foregoing solution, the at least two possible values of the time information are configured by using the second configuration information, so that the first apparatus selects a value from the configured values for sending. In this way, the signaling overheads of sending the time information can be reduced.

With reference to the first aspect, in some implementations of the first aspect, the first configuration information is used to configure at least two values, and the time information indicates one of the at least two values.

According to the foregoing solution, the at least two possible values of the time information are configured by using the first configuration information, so that the first apparatus selects a value from the configured values for sending. In addition, the at least two values are further used to configure sending of the time information corresponding to the data, so that signaling overheads of configuring information can be reduced.

According to a second aspect, a communication method is provided. The method may be performed by a second apparatus. The second apparatus may be a network device or a terminal device, may be a chip or a circuit in the network device, may be a chip or a circuit in the terminal device, may be a logical module or software that can implement all or some functions of the network device, may be a logical module or software that can implement all or some functions of the terminal device, or may be a chip or a circuit. This is not limited in this application. The method includes: sending first configuration information, where the first configuration information is used to configure sending of time information corresponding to data; and receiving the time information corresponding to the data, where the time information is generated based on an obtaining moment of the data or a remaining delay budget of the data.

According to the foregoing solution, it is configured that a first apparatus sends the time information corresponding to the data. After receiving the time information corresponding to the data, the second apparatus may determine the remaining delay budget of the data. For example, the time information is related to the obtaining moment of the data. In this case, after receiving the time information, the second apparatus may determine the remaining delay budget of the data based on a delay budget of the data and the time information. Alternatively, the time information is related to the remaining delay budget of the data. In this case, after receiving the time information, the second apparatus may determine the remaining delay budget of the data based on the time information. In this way, data transmission is completed within the delay budget of the data. Therefore, communication performance is improved.

With reference to the second aspect, in some implementations of the second aspect, the time information is generated based on any one of the following: a time interval between the obtaining moment of the data and a sending moment of the time information; a time interval between the obtaining moment of the data and a sending moment of a scheduling request, where the scheduling request is used to request a scheduling resource of the data; or a difference between the delay budget of the data and the remaining delay budget of the data.

According to the foregoing solution, in comparison with a solution in which the time information is the obtaining moment of the data, signaling overheads of sending the time information can be reduced.

With reference to the second aspect, in some implementations of the second aspect, the time information is carried in a physical uplink control channel format 0, and a value of a sequence cyclic shift of the physical uplink control channel format 0 corresponding to the time information is any one of 2, 5, 8, and 11.

According to the foregoing solution, different time information may be indicated by different values of the sequence cyclic shift, so that processing complexity of the second apparatus can be reduced.

With reference to the second aspect, in some implementations of the second aspect, the time information is carried in a physical uplink control channel format 1, the time information includes two bits, and a modulation scheme corresponding to the time information is quadrature phase shift keying.

According to the foregoing solution, the time information can be accurately indicated, and signaling overheads are low.

With reference to the second aspect, in some implementations of the second aspect, the time information is carried in a media access control control element MAC CE, where the MAC CE includes logical channel identification information or logical channel group identification information.

According to the foregoing solution, a party that schedules the data may determine an association relationship between the time information and a logical channel or a logical channel group, so that a corresponding resource can be more accurately configured for the data transmission.

With reference to the second aspect, in some implementations of the second aspect, the MAC CE further includes buffer size information.

According to the foregoing solution, the second apparatus may determine a size of the data, so that an appropriate resource may be configured for the data transmission.

With reference to the second aspect, in some implementations of the second aspect, second configuration information is sent, where the second configuration information is used to configure at least two values, and the time information indicates one of the at least two values.

According to the foregoing solution, the at least two possible values of the time information are configured by using the second configuration information, so that the first apparatus selects a value from the configured values for sending. In this way, the signaling overheads of sending the time information can be reduced.

With reference to the second aspect, in some implementations of the second aspect, the first configuration information is used to configure at least two values, and the time information indicates one of the at least two values.

According to the foregoing solution, the at least two possible values of the time information are configured by using the first configuration information, so that the first apparatus selects a value from the configured values for sending. In addition, the at least two values are further used to configure the sending of the time information corresponding to the data, so that signaling overheads of configuring information can be reduced.

According to a third aspect, a communication apparatus is provided. The communication apparatus is a first apparatus. The first apparatus may be a network device or a terminal device, may be a chip or a circuit in the network device, may be a chip or a circuit in the terminal device, may be a logical module or software that can implement all or some functions of the network device, or may be a logical module or software that can implement all or some functions of the terminal device. This is not limited in this application. The apparatus includes a processing unit and a transceiver unit. The transceiver unit is configured to receive first configuration information, and the processing unit is configured to control, based on the first configuration information, the transceiver unit to send time information corresponding to data, where the time information is generated based on an obtaining moment of the data or a remaining delay budget of the data.

With reference to the third aspect, in some implementations of the third aspect, when a media access control entity or a packet data convergence protocol entity obtains the data, the processing unit is configured to control, based on the first configuration information, the transceiver unit to send the time information corresponding to the data.

With reference to the third aspect, in some implementations of the third aspect, the time information is generated based on any one of the following: a time interval between the obtaining moment of the data and a sending moment of the time information; a time interval between the obtaining moment of the data and a sending moment of a scheduling request, where the scheduling request is used to request a scheduling resource of the data; or a difference between a delay budget of the data and the remaining delay budget of the data.

With reference to the third aspect, in some implementations of the third aspect, the time information is carried in a physical uplink control channel format 0, and a value of a sequence cyclic shift of the physical uplink control channel format 0 corresponding to the time information is any one of 2, 5, 8, and 11.

With reference to the third aspect, in some implementations of the third aspect, the time information is carried in a physical uplink control channel format 1, the time information includes two bits, and a modulation scheme corresponding to the time information is quadrature phase shift keying.

With reference to the third aspect, in some implementations of the third aspect, the time information is carried in a media access control control element MAC CE, where the MAC CE includes logical channel identification information or logical channel group identification information.

With reference to the third aspect, in some implementations of the third aspect, the MAC CE further includes buffer size information.

With reference to the third aspect, in some implementations of the third aspect, the transceiver unit is further configured to receive second configuration information, where the second configuration information is used to configure at least two values, and the time information indicates one of the at least two values.

With reference to the third aspect, in some implementations of the third aspect, the first configuration information is used to configure at least two values, and the time information indicates one of the at least two values.

According to a fourth aspect, a communication apparatus is provided. The communication apparatus is a second apparatus. The second apparatus may be a network device or a terminal device, may be a chip or a circuit in the network device, may be a chip or a circuit in the terminal device, may be a logical module or software that can implement all or some functions of the network device, or may be a logical module or software that can implement all or some functions of the terminal device. This is not limited in this application. The apparatus includes a transceiver unit. The transceiver unit is configured to send first configuration information, where the first configuration information is used to configure sending of time information corresponding to data. The transceiver unit is further configured to receive the time information corresponding to the data, where the time information is generated based on an obtaining moment of the data or a remaining delay budget of the data.

With reference to the fourth aspect, in some implementations of the fourth aspect, the time information is generated based on any one of the following: a time interval between the obtaining moment of the data and a sending moment of the time information; a time interval between the obtaining moment of the data and a sending moment of a scheduling request, where the scheduling request is used to request a scheduling resource of the data; or a difference between a delay budget of the data and the remaining delay budget of the data.

With reference to the fourth aspect, in some implementations of the fourth aspect, the time information is carried in a physical uplink control channel format 0, and a value of a sequence cyclic shift of the physical uplink control channel format 0 corresponding to the time information is any one of 2, 5, 8, and 11.

With reference to the fourth aspect, in some implementations of the fourth aspect, the time information is carried in a physical uplink control channel format 1, the time information includes two bits, and a modulation scheme corresponding to the time information is quadrature phase shift keying.

With reference to the fourth aspect, in some implementations of the fourth aspect, the time information is carried in a media access control control element MAC CE, where the MAC CE includes logical channel identification information or logical channel group identification information.

With reference to the fourth aspect, in some implementations of the fourth aspect, the MAC CE further includes buffer size information.

With reference to the fourth aspect, in some implementations of the fourth aspect, the transceiver unit is further configured to send second configuration information, where the second configuration information is used to configure at least two values, and the time information indicates one of the at least two values.

With reference to the fourth aspect, in some implementations of the fourth aspect, the first configuration information is used to configure at least two values, and the time information indicates one of the at least two values.

According to a fifth aspect, a communication apparatus is provided. The apparatus includes a processor. The processor is coupled to a memory, and may be configured to execute instructions in the memory, to implement the method according to either of the first aspect and the second aspect and any one of the possible implementations of the first aspect and the second aspect. Optionally, the apparatus further includes the memory. The memory and the processor may be deployed separately, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a first apparatus or a second apparatus, or a chip configured in the first apparatus or the second apparatus. The first apparatus may be a network device or a terminal device, and the second apparatus may be a network device or a terminal device. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a communication apparatus is provided. The apparatus includes a logic circuit and an input/output interface, and the logic circuit is configured to: be coupled to the input/output interface, and perform transmission of data through the input/output interface, to perform the method according to either of the first aspect and the second aspect and any one of the possible implementations of the first aspect and the second aspect.

According to a seventh aspect, a computer-readable storage medium is provided. The computer-readable storage medium stores a computer program (which may also be referred to as code or instructions). When the computer program is run on a computer, the computer is enabled to perform the method according to either of the first aspect and the second aspect and any one of the possible implementations of the first aspect and the second aspect.

According to an eighth aspect, a computer program product is provided. The computer program product includes a computer program (which may also be referred to as code or instructions). When the computer program is run, a computer is enabled to perform the method according to either of the first aspect and the second aspect and any one of the possible implementations of the first aspect and the second aspect.

For beneficial effects brought by the third aspect to the eighth aspect, refer to descriptions of beneficial effects in the first aspect and the second aspect. Details are not described herein again.

### BRIEF DESCRIPTION OF DRAWINGS

FIG. 1 shows a network architecture according to an embodiment of this application;
FIG. 2 is an interaction flowchart of a data scheduling method according to an embodiment of this application;
FIG. 3 is a diagram of scheduling data in an uplink-downlink slot configuration according to an embodiment of this application;
FIG. 4 is an interaction flowchart of a communication method according to an embodiment of this application;
FIG. 5 is a diagram of a communication apparatus according to an embodiment of this application;
FIG. 6 is a diagram of a structure of a communication apparatus according to an embodiment of this application;
FIG. 7 is a diagram of a structure of another communication apparatus according to an embodiment of this application; and
FIG. 8 is a diagram of a structure of still another communication apparatus according to an embodiment of this application.

### DESCRIPTION OF EMBODIMENTS

The following describes the technical solutions in embodiments of this application with reference to the accompanying drawings.

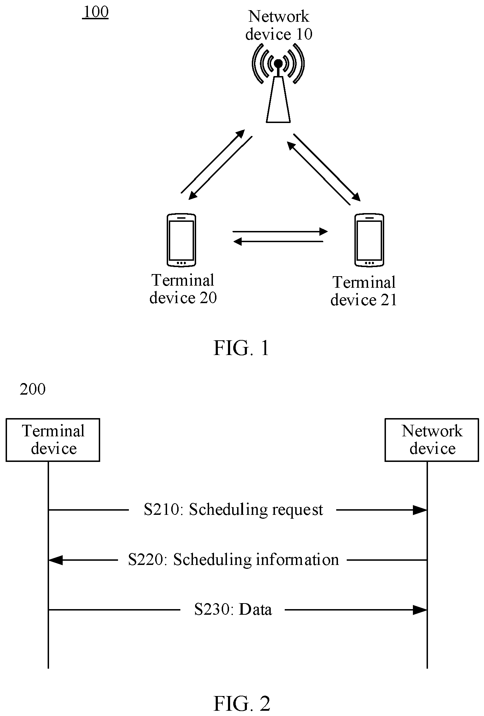

FIG. 1 shows a network architecture according to an embodiment of this application.

A communication system 100 shown in FIG. 1 includes a network device 10 and at least one terminal device, for example, a terminal device 20 and a terminal device 21. In the communication system, the terminal device 20 and the terminal device 21 may send uplink data/signals/information to the network device 10, and the network device 10 may send downlink data/signals/information to either of the terminal device 20 and the terminal device 21. In addition, transmission of data/signals/information may also be performed between the terminal device 20 and the terminal device 21.

A communication method provided in embodiments of this application may further relate to a device or a transmission node that is not shown in FIG. 1. Certainly, the communication method provided in embodiments of this application may alternatively include only a part of the devices or transmission nodes shown in FIG. 1. This is not limited in embodiments of this application.

The foregoing network architecture used in embodiments of this application is merely an example for description, and a network architecture used in embodiments of this application is not limited thereto. Any network architecture that can implement functions of the foregoing devices is applicable to embodiments of this application.

The technical solutions in embodiments of this application may be applied to various communication systems, for example, a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, a wireless fidelity (wireless fidelity, Wi-Fi) communication system, a universal mobile telecommunications system (universal mobile telecommunications system, UMTS), a worldwide interoperability for microwave access (worldwide interoperability for microwave access, WiMAX) communication system, a 5th generation (5th Generation, 5G) system or a future evolved communication system (for example, a 6G mobile communication system), vehicle-to-everything (vehicle-to-X, V2X), where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like, long term evolution-vehicle (long term evolution-vehicle, LTE-V), an internet of vehicles, machine type communication (machine type communication, MTC), an internet of things (Internet of Things, IoT), long term evolution-machine (long term evolution-machine, LTE-M), machine to machine (machine to machine, M2M), and the like.

The terminal device may be a wireless terminal device that can receive scheduling and indication information of a network device. The terminal device may be a device that provides a user with voice and/or data connectivity, a handheld device having a wireless connection function, or another processing device connected to a wireless modem.

The terminal device in embodiments of this application may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing voice/data connectivity to a user), for example, a handheld device having a wireless connection function or a vehicle-mounted device. The terminal in embodiments of this application may be a mobile phone (mobile phone), a tablet computer (pad), a computer having a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal (for example, a vehicle-mounted device, a vehicle device, a vehicle-mounted module, or a vehicle) in an internet of vehicles, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network, or the like. It may be understood that all or some functions of the terminal device in this application may alternatively be implemented by using a software function running on hardware, or may be implemented by using an instantiated virtualization function on a platform (for example, a cloud platform).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on the body or integrated into clothes or an accessory of a user. The wearable device is a hardware device, and implements a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application function and need to be used together with other devices such as smartphones, such as various smart bands or smart jewelry used for monitoring physical signs.

The network device may be a device in a wireless network. For example, the network device may be a device that is deployed in a radio access network and that provides a wireless communication function for the terminal device. For example, the network device may be a radio access network (radio access network, RAN) node that connects a terminal device to a wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseband unit, BBU), a server, a wearable device, a vehicle-mounted device, an access point (access point, AP) in a Wi-Fi system, a wireless relay node, a wireless backhaul node, a transmission point (transmission point, TP), a transmission and reception point (transmission and reception point, TRP), or the like. The network device may alternatively be a gNB or a transmission point (TRP or TP) in a 5G system, for example, an NR system, or one antenna panel or a group of antenna panels (including a plurality of antenna panels) of a base station in a 5G system, or the network device may alternatively be a network node that constitutes a gNB or a transmission point, for example, a baseband unit (BBU) or a distributed unit (distributed unit, DU). The base station may be a macro base station, a micro base station, a pico base station, a small cell, a relay station, a balloon station, or the like. It may be understood that all or some functions of the network device in this application may alternatively be implemented by using a software function running on hardware, or may be implemented by using an instantiated virtualization function on a platform (for example, a cloud platform).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in the core network (core network, CN). This is not limited in this application.

Nowadays, with continuous progress and improvement of related technologies of multimedia services (for example, CG and XR services), to enhance immersion, a network delay requirement becomes stricter. For example, in a remote control system, to ensure high fidelity of tactile and remote operations, a sampling rate of tactile information should not be less than 1 kHz, and a transmission delay requirement of each sample reaches 5 ms. Therefore, in some multimedia services with increasingly strict transmission delay requirements, how to complete transmission of data within a delay budget is a problem that needs to be considered, where the delay budget of the data may be determined based on a transmission delay requirement of a service.

FIG. 2 is an interaction flowchart of a data scheduling method according to an embodiment of this application. In FIG. 2, an example in which a network device and a terminal device are used as execution bodies for interaction is used to illustrate the method. However, the execution bodies for interaction are not limited in this application. For example, the network device in FIG. 2 may alternatively be a chip, a chip system, or a processor that supports the network device in implementing the method, or may be a logical module or software that can implement all or some functions of the network device. The terminal device in FIG. 2 may alternatively be a chip, a chip system, or a processor that supports the terminal device in implementing the method, or may be a logical module or software that can implement all or some functions of the terminal device. The method 200 shown in FIG. 2 includes the following steps.

S210: The terminal device sends a scheduling request (scheduling request, SR), where the scheduling request is used to request a scheduling resource of data. Correspondingly, the network device receives the scheduling request.

In a possible implementation, when the terminal device needs to send uplink data, the terminal device may send the scheduling request to the network device, to request, from the network device, a resource for sending the uplink data.

For example, the scheduling request may be carried on a physical uplink control channel (physical uplink control channel, PUCCH). The scheduling request includes 1-bit (bit) information, and is used to notify the network device whether there is to-be-transmitted uplink data. Sending periodicities, sending offsets (for example, slot offsets), and the like of scheduling requests on different logical channels (logical channels, LCHs) may be the same or may be different, and different logical channels may be separately configured.

For example, the scheduling request may be carried in a PUCCH format (format) 0 or a PUCCH format 1. The PUCCH format 0 may be further used to send an ACK/NACK (acknowledgment/negative acknowledgment) feedback of a hybrid automatic repeat request (hybrid automatic repeat request, HARQ). Information sent in the PUCCH format 0 includes one bit or two bits (corresponding to a case in which a scheduled physical downlink shared channel (physical downlink shared channel, PDSCH) includes two codewords). The PUCCH format 0 may occupy one resource block in frequency domain, and may occupy one or two symbols in time domain.

In a possible implementation, the PUCCH format 0 is generated based on a ZC (Zadoff-Chu) sequence. Information carried in the ZC sequence may be indicated by a final value of a sequence cyclic shift. The final value of the sequence cyclic shift may be determined based on a value *m_{CS}* of the sequence cyclic shift.

For example, when the sent information is HARQ-ACK information, *m_{CS}* corresponding to a piece of HARQ-ACK information may be determined by using a correspondence between the HARQ-ACK information and a sequence cyclic shift of the PUCCH format 0. When the sent HARQ-ACK information is one bit, a correspondence between a value of a HARQ-ACK information bit (namely, a HARQ-ACK value) and the sequence cyclic shift of the PUCCH format 0 is shown in Table 1, and *m_{CS}* corresponding to the HARQ-ACK value may be determined from the correspondence shown in Table 1. When the sent HARQ-ACK information is two bits, a correspondence between the HARQ-ACK value and the sequence cyclic shift of the PUCCH format 0 is shown in Table 2, and *m_{CS}* corresponding to the HARQ-ACK value may be determined from the correspondence shown in Table 2.

**Table 1**

| HARQ-ACK value | 0 | 1 |
|---|---|---|
| Sequence cyclic shift | *m_{CS}=*0 | *m_{CS}=*6 |

**Table 2**

| HARQ-ACK value | {0, 0} | {0, 1} | {1, 1} | {1, 0} |
|---|---|---|---|---|
| Sequence cyclic shift | *M_{CS}=*0 | *m_{CS}*=3 | *m_{CS}*=6 | *m_{CS}*=9 |

Table 2 is used as an example. When the HARQ-ACK value is {0, 1}, it is determined that *m_{CS}*=3, and a final value of the sequence cyclic shift of the PUCCH format 0 that carries the HARQ-ACK value may be further determined based on *m_{CS}=3.*

When the HARQ-ACK information and the scheduling request are multiplexed, in other words, when the scheduling request and the HARQ-ACK information are simultaneously sent, the scheduling request is a positive (positive) request (to be specific, notifying the network device that there is to-be-transmitted data). The terminal device may alternatively indicate the HARQ-ACK information and the positive scheduling request in a cyclic shift manner. For example, when the sent HARQ-ACK information and positive scheduling request are one bit, a correspondence between values of the HARQ-ACK information bit and the positive scheduling request and the sequence cyclic shift of the PUCCH format 0 is shown in Table 3. When the sent HARQ-ACK information bit and the positive scheduling request are two bits, a correspondence between values of the HARQ-ACK information bit and the positive scheduling request and the sequence cyclic shift of the PUCCH format 0 is shown in Table 4. The value of the positive scheduling request is not shown in Table 3 or Table 4. This is because the positive scheduling request is implicitly indicated, and actually does not occupy an information bit. In other words, when a value of the sequence cyclic shift is a value in Table 3 and Table 4, the HARQ-ACK value indicates the HARQ-ACK information and the positive scheduling request. Resources for sending the HARQ-ACK information or the HARQ-ACK information and the positive scheduling request are configured by the network device. Therefore, when *m_{CS}*=3 or 9, the network device may identify whether to interpret, based on Table 2, the HARQ-ACK information indicated by two bits, or to interpret, based on Table 3, the HARQ-ACK information and the positive scheduling request that are indicated by one bit.

**Table 3**

| HARQ-ACK value | 0 | 1 |
|---|---|---|
| Sequence cyclic shift | *m_{CS}*=3 | *m_{CS}*=9 |

**Table 4**

| HARQ-ACK value | {0, 0} | {0, 1} | {1, 1} | {1, 0} |
|---|---|---|---|---|
| Sequence cyclic shift | *m_{CS}*=1 | *m_{CS}*=4 | *m_{CS}*=7 | *m_{CS}*=10 |

Table 4 is used as an example. When the HARQ-ACK value is {0, 1}, it is determined, based on Table 2, that *m_{CS}*=4, and the final value of the sequence cyclic shift of the PUCCH format 0 sequence that carries the HARQ-ACK information and the positive scheduling request may be further determined based on *m_{CS}*=4*.*

S220: The network device sends scheduling information. Correspondingly, the terminal device receives the scheduling information.

In a possible implementation, after receiving the scheduling request, the network device sends the scheduling information to the terminal device in response to the scheduling request.

For example, the scheduling information may be carried on a physical downlink control channel (physical downlink control channel, PDCCH). For example, the scheduling information is sent to the terminal device by using a downlink control information (downlink control information, DCI) format 0_0 or 0_1.

For example, because the network device does not know an amount of uplink data to be sent by the terminal device, the network device may perform data scheduling on the terminal device based on a small and fixed data amount.

For example, the scheduling information may include physical uplink shared channel (physical uplink shared channel, PUSCH) resource information.

If receiving no scheduling information sent by the network device, the terminal device may continue to send the scheduling request.

S230: The terminal device sends the data. Correspondingly, the network device receives the data.

In a possible implementation, after receiving the scheduling information, the terminal device sends the data to the network device based on the scheduling information.

For example, the scheduling information includes the PUSCH resource information, and the terminal device sends the data on a PUSCH resource allocated by the network device. The data includes buffer status report (buffer status report, BSR) information, where the buffer status report information is used to notify the network device of an amount of data that still needs to be sent. If a BSR is greater than 0, the network device may continue to perform scheduling on the terminal device. To be specific, the network device continues to send the scheduling information to the terminal device through the PDCCH, and then the terminal device continues to perform transmission of the data on the PUSCH resource indicated by the scheduling information.

In a time division duplex (time division duplex, TDD) system, a ratio of a quantity of uplink slots to a quantity of downlink slots and a sequence between the uplink slots and the downlink slots may be preconfigured. The network device can receive the scheduling request only in an uplink slot, but a moment at which the terminal device obtains the data may be earlier than a moment corresponding to the slot. Consequently, in the data scheduling solution in the method 200, the network device cannot perceive the accurate moment at which the terminal device obtains the data.

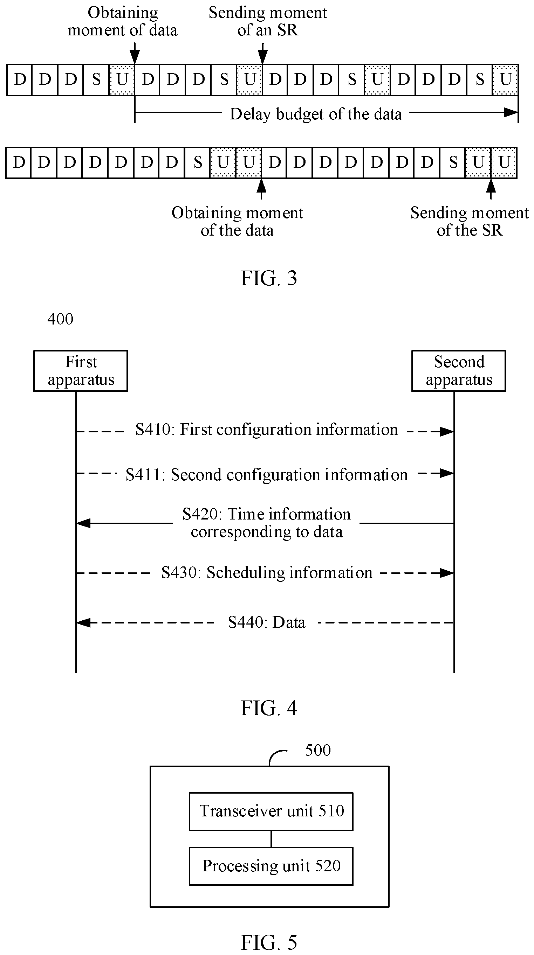

For example, a case in which a TDD slot configuration is DDDSU is shown in FIG. 3. D is a downlink slot, U is an uplink slot, and S represents a special (special) slot. The special slot may include both a symbol used for uplink transmission and a symbol used for downlink transmission. If the network device uses a sending moment of the scheduling request as an obtaining moment of the data, an error may reach five slots in comparison with an actual obtaining moment of the data. If a system uses a 15 kHz sub-carrier spacing (sub-carrier spacing, SCS), and one slot is 1 ms, the error may reach 5 ms. When a TDD slot configuration is DDDDD DDSUU, if the network device uses a sending moment of the scheduling request as an obtaining moment of the data, an error may reach nine slots in comparison with an actual obtaining moment of the data. If each slot is 1 ms, the error may reach 9 ms.

An example in which the TDD slot configuration is DDDSU is used for description. It is assumed that a delay budget of the data is 15 ms, in other words, the data is invalid after a 4^{th} uplink slot shown in FIG. 3 ends. Therefore, transmission of the data needs to be completed within the delay budget. If using an end moment of a 2^{nd} uplink slot in which the scheduling request is sent as the obtaining moment of the data, the network device completes, based on the delay budget of the data, scheduling and transmission of the data within 15 ms after the 2^{nd} uplink slot. However, the actual obtaining moment of the data is an end moment of a 1^{st} uplink slot. Consequently, data whose transmission is performed after the 4^{th} uplink slot is invalid.

In other words, when the network device does not know the accurate obtaining moment of the data at the terminal device end, it is difficult for the network device to complete the transmission of the data within the delay budget of the data.

The delay budget of the data may also be understood as valid time of the data. If an actual transmission delay of the data exceeds the delay budget of the data, the data becomes invalid. For example, the delay budget of the data is a packet delay budget (packet delay budget, PDB). The PDB is a maximum transmission delay that can be allowed in a transmission process of a data packet between a user plane function (user plane function, UPF) network element and the terminal device. If a transmission delay of a data packet between the UPF and the terminal device exceeds the PDB, the data packet may be useless for a receiving end. In this embodiment of this application, the delay budget of the data may be a maximum transmission delay that can be allowed in a transmission process of the data between the network device (for example, a base station) and the terminal device, namely, an access network (access network, AN) PDB. Alternatively, the delay budget of the data may be a maximum transmission delay that can be allowed in a transmission process of the data between the network device (for example, a base station) and another network device (for example, another base station). Alternatively, the delay budget of the data may be a maximum transmission delay that can be allowed in a transmission process of the data between the terminal device and another terminal device.

The obtaining moment of the data may be understood as a moment at which the terminal device obtains the data, and the moment at which the data is obtained may be understood as a moment at which the data is delivered to/arrives at a protocol layer (for example, a MAC layer, an RLC layer, or a PDCP layer). For example, the obtaining moment of the data is a moment at which a MAC entity, an RLC entity, or a PDCP entity obtains the data. Alternatively, the obtaining moment of the data may be represented as a number of a slot, a subframe, or a frame in which a MAC entity, an RLC entity, or a PDCP entity obtains the data. The obtaining moment of the data may alternatively be understood as a moment at which the terminal device is ready to send the data. This is not limited in this application.

In view of the foregoing problem, an embodiment of this application provides a communication method, to complete data transmission within a delay budget of data. Therefore, communication performance is improved.

FIG. 4 is an interaction flowchart of a communication method according to an embodiment of this application. The method 400 shown in FIG. 4 includes the following steps.

Optionally, in S410, a first apparatus sends first configuration information, where the first configuration information is used to configure sending of time information corresponding to data. Correspondingly, a second apparatus receives the first configuration information.

The first apparatus may be a terminal device or a network device, and the second apparatus may be a terminal device or a network device. The first apparatus and the second apparatus include but are not limited to the following cases: the first apparatus is a terminal device, and the second apparatus is a network device; the first apparatus is a terminal device, and the second apparatus is a terminal device; and the first apparatus is a network device, and the second apparatus is a network device.

It should be understood that execution bodies listed in the foregoing cases are merely examples. This is not limited in this application. For example, the first apparatus may alternatively be a chip, a chip system, or a processor that supports the network device or the terminal device in implementing the method, or may be a logical module or software that can implement all or some functions of the network device or the terminal device. The second apparatus may alternatively be a chip, a chip system, or a processor that supports the terminal device or the network device in implementing the method, or may be a logical module or software that can implement all or some functions of the terminal device or the network device.

In a possible implementation, the first configuration information includes a field, and the field indicates whether the second apparatus needs to send the time information corresponding to the data.

For example, the data is data having a delay budget, and if a transmission delay of the data exceeds the delay budget, the data becomes invalid. When the second apparatus receives the first configuration information and the first configuration information is used to configure that the second apparatus needs to send the time information corresponding to the data, for the obtained data, the second apparatus may send the time information corresponding to the data to the first apparatus. If the first configuration information received by the second apparatus is not used to configure the second apparatus to send the time information corresponding to the data, for the obtained data, the second apparatus may not send the time information corresponding to the data to the first apparatus.

In a possible implementation, the first configuration information is configuration information of a logical channel or a logical channel group (logical channel group, LCG).

For example, the first configuration information is the configuration information of the logical channel, and the configuration information includes an enhanced-BSR (enhanced-BSR) field. When the enhanced-BSR field is set to true (or another agreed value #1), it indicates that the logical channel supports an enhanced BSR. In other words, it indicates that the first configuration information is used to configure the second apparatus to send the time information corresponding to the data. On the contrary, for example, if the enhanced-BSR field is set to false (or another agreed value #2), it indicates that the first configuration information is used to configure that the second apparatus does not need to send the time information corresponding to the data. A name of the foregoing field is merely an example. This is not limited in this application.

The following shows examples of configurations including the enhanced-BSR field. Example #1 (where the enhanced-BSR field is set to true):

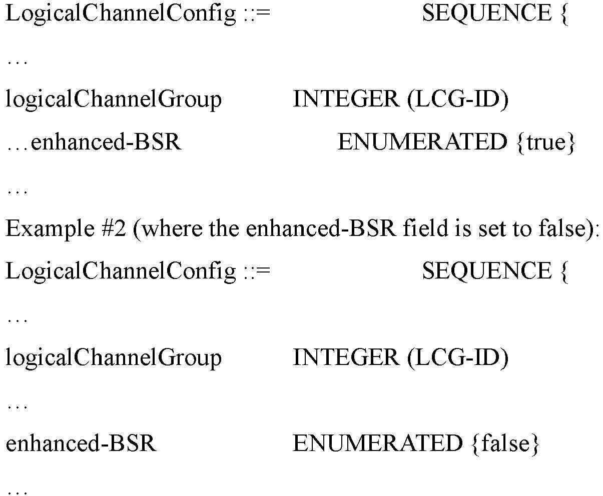

The LCG-identifier (identifier, ID) indicates a specific logical channel group to which a logical channel configured in the example belongs, and a maximum value of the LCG-ID may be 7. This is not limited in this application.

It should be understood that, in the foregoing examples, the enhanced-BSR field is configuration information of enhanced-BSR information, and the enhanced-BSR information may include the time information corresponding to the data. Specifically, whether the enhanced-BSR information includes the time information corresponding to the data is configured by using the enhanced-BSR field. If the enhanced-BSR field is used to configure that the enhanced-BSR information includes the time information corresponding to the data, for example, the enhanced-BSR field is set to true, the enhanced-BSR information includes the time information corresponding to the data. If the enhanced-BSR field is used to configure that the enhanced-BSR information does not include the time information corresponding to the data, for example, the enhanced-BSR field is set to false, the enhanced-BSR information does not include the time information corresponding to the data. The enhanced-BSR information that does not include the time information corresponding to the data may be understood as a BSR. The foregoing enhanced-BSR information is an example of a name of information including the time information corresponding to the data. This is not limited in this application.

For example, the first configuration information is an enhanced-SR (enhanced-SR) field in a scheduling request configuration (SchedulingRequestToAddMod) information element. When the enhanced-SR field is set to true (or another agreed value #3), it indicates that the first configuration information is used to configure the second apparatus to send the time information corresponding to the data. On the contrary, for example, if the enhanced-SR field is set to false (or another agreed value #4), it indicates that the first configuration information is used to configure that the second apparatus does not need to send the time information corresponding to the data. A name of the foregoing field is merely an example. This is not limited in this application.

The following shows examples of configurations including the enhanced-SR field. Example #1 (where the enhanced-SR field is set to true):

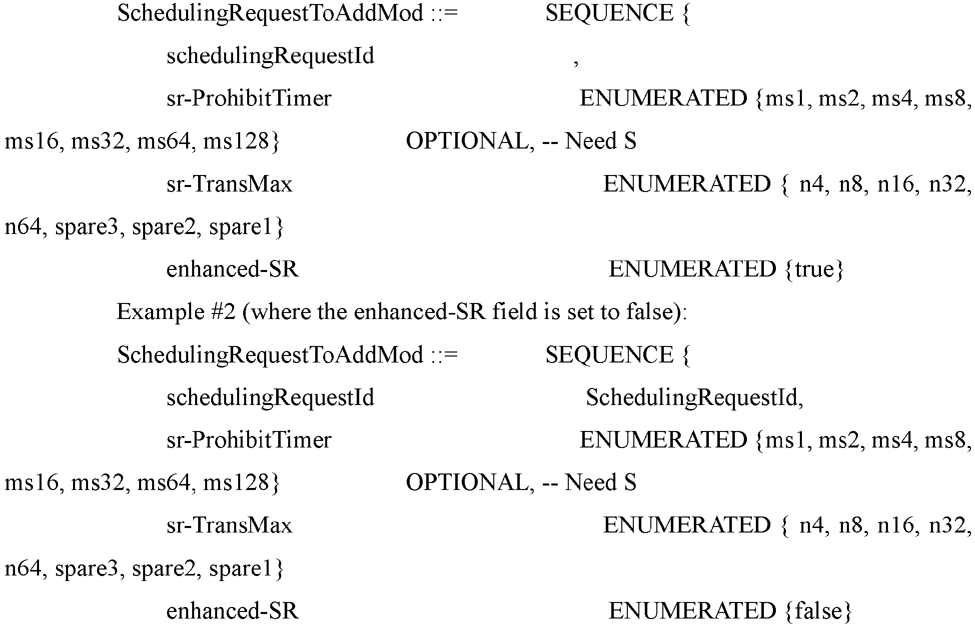

It should be understood that, in the foregoing examples, the enhanced-SR field is configuration information of enhanced-SR information, and the enhanced-SR information may include the time information corresponding to the data. Specifically, whether the enhanced-SR information includes the time information corresponding to the data is configured by using the enhanced-SR field. If the enhanced-SR field is used to configure that the enhanced-SR information includes the time information corresponding to the data, for example, the enhanced-SR field is set to true, the enhanced-SR information includes the time information corresponding to the data. If the enhanced-SR field is used to configure that the enhanced-SR information does not include the time information corresponding to the data, for example, the enhanced-SR field is set to false, the enhanced-SR information does not include the time information corresponding to the data. The enhanced-SR information that does not include the time information corresponding to the data may be understood as a scheduling request. The foregoing enhanced-SR information is an example of a name of information including the time information corresponding to the data. This is not limited in this application.

S420: The second apparatus sends the time information corresponding to the data, where the time information is generated based on an obtaining moment of the data or a remaining delay budget of the data. Correspondingly, the first apparatus receives the time information corresponding to the data.

In a possible implementation, after receiving the first configuration information (the first configuration information is used to configure that the second apparatus needs to send the time information corresponding to the data), the second apparatus sends, based on the first configuration information when the second apparatus obtains the data, the time information corresponding to the data.

For example, uplink control information (uplink control information, UCI) or a media access control control element (media access control control element, MAC CE) includes the time information corresponding to the data.

In a possible implementation, the time information is generated based on any one of the following: a time interval between the obtaining moment of the data and a sending moment of the time information; a time interval between the obtaining moment of the data and a sending moment of the scheduling request, where the scheduling request is used to request a scheduling resource of the data; or a difference between the delay budget of the data and the remaining delay budget of the data.

The sending moment of the time information may be understood as a moment at which the time information is actually sent, or may be understood as a triggering moment of the time information. The triggering moment of the time information may be understood as a generation moment of the time information or a determining moment of the time information. For example, after obtaining the data, the first apparatus determines the obtaining moment of the data, and the obtaining moment is the determining moment of the time information. Alternatively, after obtaining the data, the first apparatus may determine, based on the first configuration information, whether the time information corresponding to the data needs to be sent. If the first apparatus determines, based on the first configuration information, that the time information corresponding to the data needs to be sent, a determining moment is the triggering moment of the time information. When the sending moment of the time information is understood as the triggering moment of the time information, the sending moment of the time information is not the actual sending moment of the time information, the triggering moment of the time information may be before the actual sending moment of the time information, and a time interval between the triggering moment of the time information and the actual sending moment of the time information may be small. For example, the time interval between the triggering moment of the time information and the actual sending moment of the time information may be less than 1 millisecond (ms). This is not limited in this application.

The time information may be moment information, or may be time period information. This is not limited in this application. The remaining delay budget of the data is a remaining delay budget of the data starting from the sending moment of the time information, or a remaining delay budget of the data starting from the generation moment of the time information. For example, the obtaining moment of the data is the 3^{rd} ms, the delay budget of the data is 20 ms, the sending moment of the time information is the 8^{th} ms, and the time interval between the obtaining moment of the data and the sending moment of the time information is 5 ms. This means that the data has waited for 5 ms, in other words, the remaining delay budget of the data at the sending moment of the time information is 15 ms. Alternatively, when a sending delay of the time information is considered, if the sending delay of the time information is 1 ms, the remaining delay budget that is of the data and that exists when the time information is received is 15 ms-1 ms=14 ms.

For example, the time information is generated based on the obtaining moment of the data. The time information may indicate the obtaining moment of the data. For example, the time information is the obtaining moment of the data. Specifically, the obtaining moment of the data may be a number of a time element, or the obtaining moment of the data may be a specific minute and second in a specific day of a specific month of a specific year. This is not limited in this application. The time information may be carried in the enhanced-SR information or the enhanced-BSR information. This is not limited in this application either.

For example, the time information is generated based on the time interval between the obtaining moment of the data and the sending moment of the time information. The time information may indicate the time interval between the obtaining moment of the data and the sending moment of the time information. For example, the time information is the time interval between the obtaining moment of the data and the sending moment of the time information.

The time interval may be represented in two forms. Form #1: The time interval is measured by a quantity of time elements. For example, the time interval is the quantity of time elements. In other words, the time interval between the obtaining moment of the data and the sending moment of the time information may be understood as a quantity of time elements between the obtaining moment of the data and the sending moment of the time information. Form #2: The time interval is measured by time units. For example, the time interval is a quantity of time units. In other words, the time interval between the obtaining moment of the data and the sending moment of the time information may be understood as a quantity of time units between the obtaining moment of the data and the sending moment of the time information. In this application, the time element may be a slot, a frame, a subframe, a time domain symbol, or the like, and the time unit may be second (s), ms, microsecond (µs), or the like. This is not limited in this application. The time interval in the following descriptions is represented and understood in a similar way. Details are not described in the following descriptions again.

For example, when the enhanced-SR information includes the time information corresponding to the data, the time information may be a time interval between the obtaining moment of the data and a sending moment of the enhanced-SR information.

For example, when the enhanced-BSR information includes the time information corresponding to the data, the time information may be a time interval between the obtaining moment of the data and a sending moment of the enhanced-BSR information.

For example, the time information is generated based on the time interval between the obtaining moment of the data and the sending moment of the scheduling request. The time information may indicate the time interval between the obtaining moment of the data and the sending moment of the scheduling request. For example, the time information is the time interval between the obtaining moment of the data and the sending moment of the scheduling request.

For example, when the enhanced-BSR information includes the time information corresponding to the data, the time information may be the time interval between the obtaining moment of the data and the sending moment of the scheduling request.

When the time information is generated based on the time interval between the obtaining moment of the data and the sending moment of the scheduling request, the first apparatus may determine the time interval between the obtaining moment of the data and the sending moment of the scheduling request based on the time information. In addition, the first apparatus may determine a time interval between time of sending the scheduling request and time of sending the enhanced-BSR information. Therefore, the first apparatus may determine the obtaining moment of the data with reference to a moment at which the enhanced-BSR information is received.

For example, the first apparatus may determine, based on the time information in the enhanced-BSR information, that the time interval between the obtaining moment of the data and the sending moment of the scheduling request is three slots. In addition, the first apparatus may determine that the time interval between the scheduling request and the enhanced-B SR information is five slots. If the first apparatus receives the enhanced-BSR information in a slot #9, the first apparatus may determine that the obtaining moment of the data is a moment in a slot #1.

It should be understood that the foregoing enhanced-SR information and enhanced-BSR information are names for ease of description, and a message including the time information corresponding to the data may alternatively have another name. This is not limited in this application.

In a possible implementation, the enhanced-SR information may be included in the UCI, and the enhanced-BSR information may be included in the MAC CE.

It should be further understood that, in a TDD system, quantities and arrangement sequences of uplink time elements (for example, slots) and downlink time elements (for example, slots) may be preconfigured. Therefore, before sending the time information, the second apparatus may determine the sending moment of the time information, or before sending the scheduling request, the second apparatus may determine the sending moment of the scheduling request. As shown in FIG. 3, when a TDD slot configuration is DDDSU, the obtaining moment of the data is an end moment of a 1^{st} uplink slot. The second apparatus may determine to send the time information in a next uplink slot, or the second apparatus may determine to send the scheduling request in a next uplink slot.

For example, the time information is generated based on the remaining delay budget of the data or the difference between the delay budget of the data and the remaining delay budget of the data. The time information may indicate the remaining delay budget of the data, or indicate the difference between the delay budget of the data and the remaining delay budget of the data. For example, the time information is the remaining delay budget of the data, or the time information is the difference between the delay budget of the data and the remaining delay budget of the data.

Assuming that the delay budget of the data is 20 ms, the second apparatus may determine the sending moment of the time information, and may further determine the remaining delay budget that is of the data and that exists when the time information is sent. The difference between the delay budget of the data and the remaining delay budget of the data may be understood as the time interval between the obtaining moment of the data and the sending moment of the time information. For example, if the time interval between the obtaining moment and the sending moment of the time information is 5 ms, the remaining delay budget that exists when the time information is sent is 20 ms-5 ms=15 ms, that is, the time information may indicate 15 ms.

In a possible implementation, the foregoing time information corresponding to the data is carried on a PUCCH or a PUSCH.

For example, the UCI is carried on the PUCCH. When the time information corresponding to the data is included in the UCI, the time information corresponding to the data may be carried in a PUCCH format 0, and a value of a sequence cyclic shift of the PUCCH format 0 corresponding to the time information is any one of 2, 5, 8, and 11.

For example, the UCI is carried on the PUCCH. When the time information corresponding to the data is included in the UCI, the time information corresponding to the data may be carried in a PUCCH format 1, the time information includes two bits, and a modulation scheme corresponding to the time information is quadrature phase shift keying (quadrature phase shift keying, QPSK).

For example, the MAC CE is carried on the PUSCH. When the time information corresponding to the data is included in the MAC CE, the MAC CE includes logical channel identification information or logical channel group identification information. In addition, the MAC CE may further include buffer size (buffer size) information. The buffer size information may indicate a size of data whose transmission is not completed, so that the first apparatus continues to schedule the data.

Optionally, the method 400 further includes the following step.

S411: The first apparatus sends second configuration information, where the second configuration information is used to configure at least one value, and the time information indicates one of the at least one value. Correspondingly, the second apparatus receives the second configuration information.

Optionally, RRC signaling includes the second configuration information.

In a possible implementation, the SchedulingRequestToAddMod information element includes the second configuration information, and the second configuration information is used to configure at least one value.

For example, the second configuration information is a parameter DataArrival-to-SR-DelayList. The parameter is used to configure at least one value, and each value may represent one type of time information. The name DataArrival-to-SR-DelayList herein is merely an example. This is not limited in this application.

A quantity of values configured by using DataArrival-to-SR-DelayList and a value range of each value may be predefined. The following is an example of a DataArrival-to-SR-DelayList predefinition.

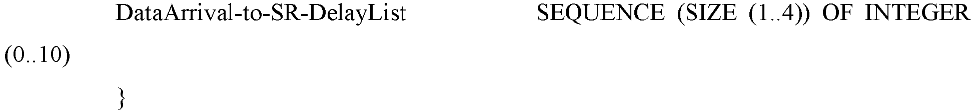

This example shows that the parameter DataArrival-to-SR-DelayList may be used to configure a minimum of one value and a maximum of four values. A range of each value is greater than or equal to 0 and less than or equal to 10. In addition to the foregoing example, DataArrival-to-SR-DelayList may alternatively be used to configure values of other quantities and ranges. A specific quantity of values configured by using DataArrival-to-SR-DelayList and a value range of each value are not limited in this application.

In a possible implementation, if N values are configured by using the second configuration information, a quantity of bits included in the time information corresponding to the data is ceil(log2(N)), where ceil represents a round-up function.

Example #1: DataArrival-to-SR-DelayList is used to configure four values, and a range of each value is greater than or equal to 0 and less than or equal to 10. It is assumed that the four values are 1, 4, 7, and 10. The time information corresponding to the data includes 2-bit information. For example, the time information corresponding to the data is a quantity of slots between the obtaining moment of the data and the sending moment of the time information. Values and meanings of the bit information indicating the time information corresponding to the data are shown in Table 5.

**Table 5**

| Bit information | Meaning |
|---|---|
| '00' | The quantity of slots is 1 |
| '01' | The quantity of slots is 4 |
| '10' | The quantity of slots is 7 |
| '11' | The quantity of slots is 10 |

In the example #1, when the time information corresponding to the data is '01', it indicates that the quantity of slots between the obtaining moment of the data and the sending moment of the time information is 4. The first apparatus configures a transmission resource for the data with reference to the time information.

Example #2: DataArrival-to-SR-DelayList is used to configure four values, and a range of each value is greater than or equal to 0 and less than or equal to 10. It is assumed that the four values are 1, 4, 7, and 10. The time information corresponding to the data includes 2-bit information. For example, the time information corresponding to the data is a quantity of slots between the obtaining moment of the data and the sending moment of the time information. Values and meanings of the bit information indicating the time information corresponding to the data are shown in Table 6.

**Table 6**

| Bit information | Meaning |
|---|---|
| '00' | The quantity of slots is less than or equal to 1 |
| '01' | The quantity of slots is greater than 1 and less than or equal to 4 |
| '10' | The quantity of slots is greater than 4 and less than or equal to 7 |
| '11' | The quantity of slots is greater than 7 and less than or equal to 10 |

In the example #2, when the time information corresponding to the data is '01', it indicates that the quantity of slots between the obtaining moment of the data and the sending moment of the time information is greater than 1 and less than or equal to 4. The first apparatus may determine that the quantity of slots between the obtaining moment of the data and the sending moment of the time information is 1, 4, or an average of 1 and 4. Alternatively, the first apparatus may have another processing manner. This is not limited in this application. The first apparatus may configure a transmission resource for the data with reference to the time information.

The values and meanings of the bit information in Table 5 and Table 6 are merely examples. This is not limited in this application. The time information corresponding to the data may alternatively be another possibility mentioned in S420. In the another possibility, values and meanings of bit information corresponding to the time information may be similar to those shown in Table 5 and Table 6. Examples are not listed one by one herein.

Example #3: DataArrival-to-SR-DelayList is used to configure four values, and a range of each value is greater than or equal to 0 and less than or equal to 1. It is assumed that the four values are 1/8, 3/8, 5/8, and 7/8. The time information corresponding to the data includes 2-bit information. For example, the time information corresponding to the data is a proportion occupied by the time interval between the obtaining moment of the data and the sending moment of the time information in a PDB. Values and meanings of the bit information indicating the time information corresponding to the data are shown in Table 7.

**Table 7**

| Bit information | Meaning |
|---|---|
| '00' | 1/8*PDB |
| '01' | 3/8*PDB |
| '10' | 5/8*PDB |
| '11' | 7/8*PDB |

In the example #3, when the time information corresponding to the data is '01', it indicates that the time interval between the obtaining moment of the data and the sending moment of the time information accounts 3/8 of the PDB. Assuming that the PDB is 8 ms, the first apparatus may determine that the time interval between the obtaining moment of the data and the sending moment of the time information is 3 ms. The first apparatus configures a transmission resource for the data with reference to the time information.

Example #4: DataArrival-to-SR-DelayList is used to configure four values, and a range of each value is greater than or equal to 0 and less than or equal to 1. It is assumed that the four values are 1/8, 3/8, 5/8, and 7/8. The time information corresponding to the data includes 2-bit information. For example, the time information corresponding to the data is a proportion occupied by the time interval between the obtaining moment of the data and the sending moment of the time information in a PDB. Values and meanings of the bit information indicating the time information corresponding to the data are shown in Table 8.

**Table 8**

| Bit information | Meaning |
|---|---|
| '00' | Less than or equal to 1/8*PDB |
| '01' | Greater than 1/8*PDB and less than or equal to 3/8*PDB |
| '10' | Greater than 3/8*PDB and less than or equal to 5/8*PDB |
| '11' | Greater than 5/8*PDB and less than or equal to 7/8*PDB |

In the example #4, when the time information corresponding to the data is '01', it indicates that the time interval between the obtaining moment of the data and the sending moment of the time information is greater than 1/8 of the PDB and less than or equal to 3/8 of the PDB. Assuming that the PDB is 8 ms, the first apparatus may determine that the time interval between the obtaining moment of the data and the sending moment of the time information is 1 ms, 3 ms, or an average of 1 ms and 3 ms, namely, 2 ms. Alternatively, the first apparatus may have another processing manner. This is not limited in this application. The first apparatus configures a transmission resource for the data with reference to the time information.

The values and meanings in Table 7 and Table 8 are also merely examples. This is not limited in this application. Alternatively, the time information corresponding to the data may be another possibility mentioned in S420 (for example, the time information corresponding to the data is a proportion occupied by the time interval between the obtaining moment of the data and the sending moment of the scheduling request in the delay budget of the data; the time information corresponding to the data is a proportion occupied by the remaining delay budget of the data in the delay budget of the data; or the time information corresponding to the data is a proportion occupied by the difference between the delay budget of the data and the remaining delay budget in the delay budget of the data). In the another possibility, values and meanings of bit information corresponding to the time information may be similar to those shown in Table 7 and Table 8. Examples are not listed one by one herein.

For example, the time information corresponding to the data includes two bits, and a correspondence between the value of the bit information corresponding to the time information corresponding to the data and the value of the sequence cyclic shift is shown in Table 9.

**Table 9**

| Bit information | {0, 0} | {0, 1} | {1, 1} | {1, 0} |
|---|---|---|---|---|
| Sequence cyclic shift | *m_{CS}=*2 | *m_{CS}*=5 | *m_{CS}*=8 | *m_{CS}*=11 |

For example, when the value of the bit information of the time information corresponding to the data is {0, 1}, the value of the sequence cyclic shift of the PUCCH format 0 corresponding to the time information is 5. The first apparatus may interpret the time information corresponding to the data based on *m_{CS}*=5.

It should be understood that the foregoing values of the bit information and the foregoing values of the sequence cyclic shift are merely examples, and the correspondence between the value of the bit information and the value of the sequence cyclic shift is also merely an example. This is not limited in this application.

In a solution parallel to S411, the first configuration information is used to configure at least two values, and the time information indicates one of the at least two values. In addition, the at least two values may be used to configure the sending of the time information corresponding to the data.

Specifically, for a manner in which the first configuration information is used to configure the at least two values, a manner in which the second apparatus sends the time information based on the at least two values, and other related content, refer to related descriptions in S411. Details are not described again.

Optionally, the method 400 further includes the following step.

S430: The first apparatus sends scheduling information, where the scheduling information is used to schedule the data. Correspondingly, the second apparatus receives the scheduling information.

For example, the scheduling information may be carried on a PDCCH. For example, the scheduling information is sent to the terminal device by using a DCI format 0_0 or 0_1.

For example, the first apparatus generates the scheduling information based on the time information corresponding to the data. The scheduling information includes PUSCH resource information.

In a possible implementation, the scheduling request and the time information corresponding to the data may be sent in a same piece of information, or the scheduling request may be separately sent.

If receiving no scheduling information, the second apparatus may continue to send the scheduling request.

Optionally, the method 400 further includes the following step.

S440: The second apparatus sends the data. Correspondingly, the first apparatus receives the data.

For example, the data is carried on a PUSCH resource indicated by the PUSCH resource information in the scheduling information. The second apparatus sends the data on the PUSCH resource allocated by the first apparatus. The data includes BSR information, where the BSR information is used to notify the first apparatus of an amount of data that still needs to be sent. If a BSR is greater than 0, the second apparatus continues to configure the transmission resource for the second apparatus based on the time information corresponding to the data, and then the second apparatus continues to perform transmission of the remaining data on the configured transmission resource.

According to the method 400, the first apparatus may determine obtaining time of the data, so that the data transmission can be completed within the delay budget of the data. Therefore, communication performance is improved.

The steps in the dashed lines in the foregoing flowchart are optional steps, and a sequence of the steps is determined based on internal logic of the method. Sequence numbers shown in the foregoing flowchart are merely examples, and do not limit a sequence of the steps in this application.

It should be further understood that the methods provided in embodiments of this application may be used separately, or may be used in combination. This is not limited in this application. Various implementations provided in embodiments of this application may be used separately, or may be used in combination. This is not limited in this application. Various examples provided in embodiments of this application may be used separately, or may be used in combination. This is not limited in this application.

It should be understood that the term "and/or" in this application describes only an association relationship between associated objects and represents that three relationships may exist. For example, A and/or B may represent the following three cases: Both A and B exist, only A exists, and only B exists, where A and B may be singular or plural. In addition, the character "/" in this specification usually indicates an "or" relationship between the associated objects, but may also indicate an "and/or" relationship. For details, refer to the context for understanding.

In this application, "at least one item (piece)" means one or more items (pieces), and "at least two items (pieces)" and "a plurality of items (pieces)" mean two or more items (pieces). "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be noted that an execution body shown in FIG. 4 is merely an example. The execution body may alternatively be a chip, a chip system, or a processor that supports the execution body in implementing the method shown in FIG. 4. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that in the foregoing method embodiments, the method and the operation implemented by the first apparatus may also be implemented by a component (for example, a chip or a circuit) in the first apparatus, and the method and the operation implemented by the second apparatus may also be implemented by a component (for example, a chip or a circuit) in the second apparatus.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that module division in embodiments of this application is an example, and is merely logical function division. During actual implementation, there may be another division manner. An example in which each functional module is obtained through division based on each corresponding function is used below for description.

FIG. 5 is a block diagram of a communication apparatus according to an embodiment of this application. A communication apparatus 500 shown in FIG. 5 includes a transceiver unit 510 and a processing unit 520. The transceiver unit 510 may communicate with the outside, and the processing unit 520 is configured to perform data processing. The transceiver unit 510 may also be referred to as a communication interface or a communication unit.

Optionally, the transceiver unit 510 may include a sending unit and a receiving unit. The sending unit is configured to perform a sending operation in the foregoing method embodiments. The receiving unit is configured to perform a receiving operation in the foregoing method embodiments.

It should be noted that the communication apparatus 500 may include the sending unit, but does not include the receiving unit. Alternatively, the communication apparatus 500 may include the receiving unit, but does not include the sending unit. This specifically depends on whether the foregoing solution performed by the communication apparatus 500 includes sending actions and receiving actions.

Optionally, the communication apparatus 500 may further include a storage unit. The storage unit may be configured to store instructions and/or data. The processing unit 520 may read the instructions and/or the data in the storage unit.

In a design, the communication apparatus 500 may be configured to perform an action performed by the first apparatus in the foregoing method embodiments.

Optionally, the communication apparatus 500 may be the first apparatus, the transceiver unit 510 is configured to perform receiving or sending operations of the first apparatus in the foregoing method embodiments, and the processing unit 520 is configured to perform an internal processing operation of the first apparatus in the foregoing method embodiments.

Optionally, the communication apparatus 500 may be a device including the first apparatus. Alternatively, the communication apparatus 500 may be a component configured in the first apparatus, for example, a chip in the first apparatus. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to receive first configuration information, and the processing unit 520 is configured to control, based on the first configuration information, the transceiver unit 510 to send time information corresponding to data, where the time information is generated based on an obtaining moment of the data or a remaining delay budget of the data.

In a possible implementation, when a media access control entity or a packet data convergence protocol entity obtains the data, the processing unit 520 is configured to control, based on the first configuration information, the transceiver unit 510 to send the time information corresponding to the data.

In a possible implementation, the time information is generated based on any one of the following: a time interval between the obtaining moment of the data and a sending moment of the time information; a time interval between the obtaining moment of the data and a sending moment of a scheduling request, where the scheduling request is used to request a scheduling resource of the data; or a difference between a delay budget of the data and the remaining delay budget of the data.

In a possible implementation, the time information is carried in a physical uplink control channel format 0, and a value of a sequence cyclic shift of the physical uplink control channel format 0 corresponding to the time information is any one of 2, 5, 8, and 11.

In a possible implementation, the time information is carried in a physical uplink control channel format 1, the time information includes two bits, and a modulation scheme corresponding to the time information is quadrature phase shift keying.

In a possible implementation, the time information is carried in a media access control control element MAC CE, where the MAC CE includes logical channel identification information or logical channel group identification information.

In a possible implementation, the MAC CE further includes buffer size information.

In a possible implementation, the transceiver unit 510 is further configured to receive second configuration information, where the second configuration information is used to configure at least two values, and the time information indicates one of the at least two values.

In a possible implementation, the first configuration information is used to configure at least two values, and the time information indicates one of the at least two values.

In another design, the communication apparatus 500 shown in FIG. 5 may be configured to perform an action performed by the second apparatus in the foregoing method embodiments.

Optionally, the communication apparatus 500 may be the second apparatus, the transceiver unit 510 is configured to perform receiving or sending operations of the second apparatus in the foregoing method embodiments, and the processing unit 520 is configured to perform an internal processing operation of the second apparatus in the foregoing method embodiments.

Optionally, the communication apparatus 500 may be a device including the second apparatus. Alternatively, the communication apparatus 500 may be a component configured in the second apparatus, for example, a chip in the second apparatus. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to send first configuration information, where the first configuration information is used to configure sending of time information corresponding to data. The transceiver unit 510 is further configured to receive the time information corresponding to the data, where the time information is generated based on an obtaining moment of the data or a remaining delay budget of the data.

In a possible implementation, the time information is generated based on any one of the following: a time interval between the obtaining moment of the data and a sending moment of the time information; a time interval between the obtaining moment of the data and a sending moment of a scheduling request, where the scheduling request is used to request a scheduling resource of the data; or a difference between a delay budget of the data and the remaining delay budget of the data.

In a possible implementation, the time information is carried in a physical uplink control channel format 0, and a value of a sequence cyclic shift of the physical uplink control channel format 0 corresponding to the time information is any one of 2, 5, 8, and 11.

In a possible implementation, the time information is carried in a physical uplink control channel format 1, the time information includes two bits, and a modulation scheme corresponding to the time information is quadrature phase shift keying.

In a possible implementation, the time information is carried in a media access control control element MAC CE, where the MAC CE includes logical channel identification information or logical channel group identification information.

In a possible implementation, the MAC CE further includes buffer size information.

In a possible implementation, the transceiver unit 510 is further configured to send second configuration information, where the second configuration information is used to configure at least two values, and the time information indicates one of the at least two values.

In a possible implementation, the first configuration information is used to configure at least two values, and the time information indicates one of the at least two values.

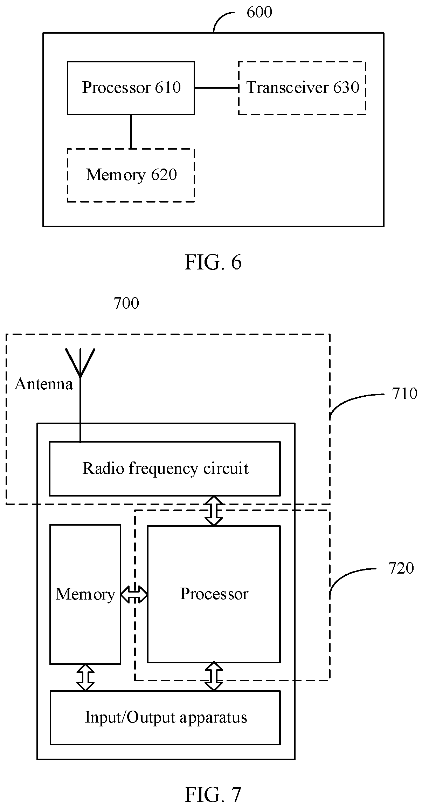

As shown in FIG. 6, an embodiment of this application further provides a communication apparatus 600. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the methods in the foregoing method embodiments are performed.

Optionally, the communication apparatus 600 includes one or more processors 610.

Optionally, as shown in FIG. 6, the communication apparatus 600 may further include the memory 620.

Optionally, the communication apparatus 600 may include one or more memories 620.

Optionally, the memory 620 and the processor 610 may be integrated, or separately disposed.

Optionally, as shown in FIG. 6, the communication apparatus 600 may further include a transceiver 630 and/or a communication interface. The transceiver 630 and/or the communication interface are/is configured to receive and/or send a signal. For example, the processor 610 is configured to control the transceiver 630 and/or the communication interface to receive and/or send the signal.

Optionally, a component that is in the transceiver 630 and that is configured to implement a receiving function may be considered as a receiving module, and a component that is in the transceiver 630 and that is configured to implement a sending function may be considered as a sending module. That is, the transceiver 630 includes a receiver and a transmitter. The transceiver may also be sometimes referred to as a transceiver machine, a transceiver module, a transceiver circuit, or the like. The receiver may also be sometimes referred to as a receiver machine, a receiving module, a receiving circuit, or the like. The transmitter may also be sometimes referred to as a transmitter machine, a transmitter, a transmitting module, a transmitting circuit, or the like.

In a solution, the communication apparatus 600 is configured to implement operations performed by the first apparatus in the foregoing method embodiments. For example, the processor 610 is configured to implement an operation performed inside the first apparatus in the foregoing method embodiments, and the transceiver 630 is configured to implement receiving or sending operations performed by the first apparatus in the foregoing method embodiments (for example, operations in S410, S411, S420, S430, and S440).

In a solution, the communication apparatus 600 is configured to implement operations performed by the second apparatus in the foregoing method embodiments. For example, the processor 610 is configured to implement an operation performed inside the second apparatus in the foregoing method embodiments, and the transceiver 630 is configured to implement receiving or sending operations performed by the second apparatus in the foregoing method embodiments (for example, operations in S410, S411, S420, S430, and S440).

An embodiment of this application further provides a communication apparatus 700. The communication apparatus 700 may be a terminal device or a network device, or may be a chip in the terminal device or the network device. The communication apparatus 700 may be configured to perform operations performed by the first apparatus or the second apparatus in the foregoing method embodiments.

FIG. 7 is a simplified diagram of a structure of a communication apparatus. As shown in FIG. 7, the communication apparatus 700 includes a processor, a memory, a radio frequency circuit, an antenna, and an input/output apparatus. The processor is mainly configured to: process a communication protocol and communication data, control the communication apparatus 700, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus 700, the radio frequency circuit receives the radio frequency signal by using the antenna, converts the radio frequency signal into a baseband signal, and outputs the baseband signal to the processor. The processor converts the baseband signal into data and processes the data. For ease of description, FIG. 7 shows only one memory and one processor. In an actual product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the communication apparatus 700, and the processor that has a processing function may be considered as a processing unit of the communication apparatus 700.

As shown in FIG. 7, the communication apparatus 700 includes a transceiver unit 710 and a processing unit 720. The transceiver unit 710 may also be referred to as a transceiver, a transceiver machine, a transceiver apparatus, a transceiver circuit, or the like. The processing unit 720 may also be referred to as a processor, a processing board, a processing module, a processing apparatus, or the like.

Optionally, a component that is in the transceiver unit 710 and that is configured to implement a receiving function may be considered as a receiving unit, and a component that is in the transceiver unit 710 and that is configured to implement a sending function may be considered as a sending unit. That is, the transceiver unit 710 includes the receiving unit and the sending unit. The receiving unit may also be referred to as a receiver machine, a receiver, a receiving apparatus, a receiving circuit, or the like. The sending unit may also be referred to as a transmitter machine, a transmitter, a transmitting apparatus, a transmitting circuit, or the like.

In an implementation, the processing unit 720 and the transceiver unit 710 are configured to perform operations on a first apparatus side.

For example, the transceiver unit 710 is configured to perform receiving and sending operations in operations such as S410, S411, S420, S430, and S440.

In another implementation, the processing unit 720 and the transceiver unit 710 are configured to perform operations on a second apparatus side.

For example, the transceiver unit 710 is configured to perform receiving and sending operations in operations of S410, S411, S420, S430, and S440.

It should be understood that FIG. 7 is merely an example instead of a limitation. The communication apparatus 700 including the transceiver unit and the processing unit may not depend on the structure shown in FIG. 7.

When the communication apparatus 700 is a chip, the chip includes a transceiver unit and a processing unit. The transceiver unit may be an input/output circuit or a communication interface. The processing unit may be a processor, a microprocessor, or an integrated circuit integrated on the chip.

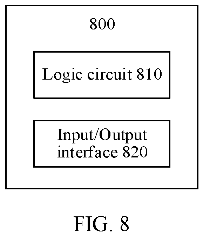

As shown in FIG. 8, an embodiment of this application further provides a communication apparatus 800. The communication apparatus 800 includes a logic circuit 810 and an input/output interface (input/output interface) 820.

The logic circuit 810 may be a processing circuit in the communication apparatus 800. The logic circuit 810 may be coupled and connected to a storage unit, and invoke instructions in the storage unit, so that the communication apparatus 800 can implement the method and function in embodiments of this application. The input/output interface 820 may be an input/output circuit in the communication apparatus 800, and outputs information processed by the communication apparatus 800, or inputs to-be-processed data or signaling information into the communication apparatus 800 for processing.

In a solution, the communication apparatus 800 is configured to implement operations performed by the first apparatus in the foregoing method embodiments.

For example, the logic circuit 810 is configured to implement processing-related operations performed by the first apparatus in the foregoing method embodiments. The input/output interface 820 is configured to implement sending and/or receiving related operations performed by the first apparatus in the foregoing method embodiments, for example, receiving and sending operations of the first apparatus in S410, S411, S420, S430, and S440. For specific operations performed by the logic circuit 810, refer to the foregoing descriptions of the processing unit 520. For operations performed by the input/output interface 820, refer to the foregoing descriptions of the transceiver unit 510. Details are not described herein again.

In another solution, the communication apparatus 800 is configured to implement operations performed by the second apparatus in the foregoing method embodiments.

For example, the logic circuit 810 is configured to implement processing-related operations performed by the second apparatus in the foregoing method embodiments, the input/output interface 820 is configured to implement sending and/or receiving related operations performed by the second apparatus in the foregoing method embodiments, for example, receiving and sending operations of the second apparatus in S410, S411, S420, S430, and S440. For details of operations performed by the logic circuit 810, refer to the foregoing descriptions of the processing unit 920. For specific operations performed by the logic circuit 810, refer to the foregoing descriptions of the processing unit 520. For operations performed by the input/output interface 820, refer to the foregoing descriptions of the transceiver unit 510. Details are not described herein again.

It should be understood that, the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods may be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed by a hardware decoding processor, or may be performed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and the method described in this specification includes but is not limited to these memories and any memory of another proper type.

According to the method provided in embodiments of this application, this application further provides a computer-readable medium. The computer-readable medium stores program code. When the program code is run on a computer, the computer is enabled to perform the method shown in the method embodiments. For example, when a computer program is executed by a computer, the computer is enabled to implement the method performed by the first apparatus or the method performed by the second apparatus in the foregoing method embodiment.

An embodiment of this application further provides a computer program product including instructions. When the instructions are executed by a computer, the computer is enabled to implement the method performed by the first apparatus or the method performed by the second apparatus in the foregoing method embodiment.

For explanations and beneficial effects of related content in any communication apparatus provided above, refer to the foregoing corresponding method embodiments. Details are not described herein again.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or transmission of the computer instructions may be performed from a computer-readable storage medium to another computer-readable storage medium. For example, the transmission of the computer instructions may be performed from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The first apparatus and the second apparatus in the foregoing apparatus embodiments correspond to the first apparatus and the second apparatus in the method embodiments, and corresponding modules or units perform corresponding steps. For example, a communication unit (transceiver) performs a receiving or sending step in the method embodiments, and a processing unit (processor) may perform a step other than the sending and receiving steps. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that is run on a processor, a processor, a target, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from the foregoing various computer-readable media that store various data structures. For example, the components may communicate by using a local and/or remote process based on a signal having one or more data packets (for example, data from two components interacting with another component in a local system, a distributed system, and/or across a network such as the Internet interacting with another system by using the signal).

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or another form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the function is implemented in a form of a software function unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first configuration information; and
sending, based on the first configuration information, time information corresponding to data, wherein the time information is generated based on an obtaining moment of the data or a remaining delay budget of the data.

2. The method according to claim 1, wherein the sending, based on the first configuration information, time information corresponding to data comprises:
when a media access control entity or a packet data convergence protocol entity obtains the data, sending, based on the first configuration information, the time information corresponding to the data.

3. The method according to claim 1 or 2, wherein the time information is generated based on any one of the following:
a time interval between the obtaining moment of the data and a sending moment of the time information;
a time interval between the obtaining moment of the data and a sending moment of a scheduling request, wherein the scheduling request is used to request a scheduling resource of the data; or
a difference between a delay budget of the data and the remaining delay budget of the data.

4. The method according to any one of claims 1 to 3, wherein the time information is carried in a physical uplink control channel format 0, and a value of a sequence cyclic shift of the physical uplink control channel format 0 corresponding to the time information is any one of 2, 5, 8, and 11.

5. The method according to any one of claims 1 to 3, wherein the time information is carried in a physical uplink control channel format 1, the time information comprises two bits, and a modulation scheme corresponding to the time information is quadrature phase shift keying.

6. The method according to any one of claims 1 to 3, wherein the time information is carried in a media access control control element MAC CE, wherein the MAC CE comprises logical channel identification information or logical channel group identification information.

7. The method according to claim 6, wherein the MAC CE further comprises buffer size information.

8. The method according to any one of claims 1 to 7, wherein the method further comprises:
receiving second configuration information, wherein the second configuration information is used to configure at least two values, and the time information indicates one of the at least two values.

9. The method according to any one of claims 1 to 7, wherein the first configuration information is used to configure at least two values, and the time information indicates one of the at least two values.

10. A communication method, comprising:
sending first configuration information, wherein the first configuration information is used to configure sending of time information corresponding to data; and
receiving the time information corresponding to the data, wherein the time information is generated based on an obtaining moment of the data or a remaining delay budget of the data.

11. The method according to claim 10, wherein the time information is generated based on any one of the following:
a time interval between the obtaining moment of the data and a sending moment of the time information;
a time interval between the obtaining moment of the data and a sending moment of a scheduling request, wherein the scheduling request is used to request a scheduling resource of the data; or
a difference between a delay budget of the data and the remaining delay budget of the data.

12. The method according to claim 10 or 11, wherein the time information is carried in a physical uplink control channel format 0, and a value of a sequence cyclic shift of the physical uplink control channel format 0 corresponding to the time information is any one of 2, 5, 8, and 11.

13. The method according to claim 10 or 11, wherein the time information is carried in a physical uplink control channel format 1, the time information comprises two bits, and a modulation scheme corresponding to the time information is quadrature phase shift keying.

14. The method according to claim 10 or 11, wherein the time information is carried in a media access control control element MAC CE, wherein the MAC CE comprises logical channel identification information or logical channel group identification information.

15. The method according to claim 14, wherein the MAC CE further comprises buffer size information.

16. The method according to any one of claims 10 to 15, wherein the method further comprises:
sending second configuration information, wherein the second configuration information is used to configure at least two values, and the time information indicates one of the at least two values.

17. The method according to any one of claims 10 to 15, wherein the first configuration information is used to configure at least two values, and the time information indicates one of the at least two values.

18. A communication apparatus, wherein the apparatus comprises units configured to perform the steps of the method according to any one of claims 1 to 9, or the apparatus comprises units configured to perform the steps of the method according to any one of claims 10 to 17.

19. A communication apparatus, wherein the apparatus comprises a processor, the processor is coupled to a memory, and the memory stores instructions; and when the instructions are run by the processor, the processor is enabled to perform the method according to any one of claims 1 to 9, or perform the method according to any one of claims 10 to 17.

20. A communication apparatus, wherein the apparatus comprises a logic circuit, and the logic circuit is configured to: be coupled to an input/output interface, and perform data transmission through the input/output interface, to perform the method according to any one of claims 1 to 9, or perform the method according to any one of claims 10 to 17.

21. A computer-readable storage medium, wherein the computer-readable storage medium is configured to store computer programs, and when the computer programs are run on a computer, the computer is enabled to perform the method according to any one of claims 1 to 9, or perform the method according to any one of claims 10 to 17.

22. A computer program product, wherein the computer program product comprises computer program codes, and when the computer program codes are run, the method according to any one of claims 1 to 9 is implemented, or the method according to any one of claims 10 to 17 is performed.
